# EUROPEAN PATENT SPECIFICATION

(11) **EP 0 942 848 B1**
(45) Date of publication and mention of the grant of the patent: **24.09.2003**
(21) Application number: 97949300.4
(22) Date of filing: 08.12.1997
(51) Int. Cl.: B60R 7/02, B60P 7/08, B63B 25/24, B61D 45/00

(54) **LOAD RESTRAINT SYSTEM AND A METHOD OF RESTRAINING LOAD**
LASTHALTESYSTEM UND VERFAHREN ZUM HALTEN VON LASTEN
SYSTEME DE RETENUE DE CHARGE ET PROCEDE POUR RETENIR UNE CHARGE

(30) Priority: 13.12.1996 GB 9625997
(43) Date of publication of application: 22.09.1999
(73) Proprietor: AUTOLIV DEVELOPMENT AB, 447 83 Vargarda (SE)
(72) Inventor: ENNERDAL, Leif, S-441 56 Alingsas (SE)
(74) Representative: Frankland, Nigel Howard
(86) International application number: SE9702040
(87) International publication number: WO98025797

(56) References cited:
- EP-A- 0 381 911
- EP-A- 0 670 244
- DE-A- 2 736 973
- DE-C- 4 426 882
- FR-A- 2 467 115
- FR-A- 2 719 529
- US-A- 5 338 136

## Description

**THE PRESENT INVENTION** relates to a vehicle with a load restraint system, and more particularly relates to a vehicle such as, for example, a motor vehicle, a railway carriage, or a lorry or truck with a load restraint system.

A vehicle with a load restraint system according to the preamble of claim 1 is known from FR 2 719 529 A.

According to one aspect of this invention there is provided a vehicle with a load restraint system, the load restraint system comprising an elongate element, one end of the element being connected to a retractor mechanism comprising a spring-biased spool, the retractor mechanism being mounted on the vehicle, wherein the vehicle is additionally provided with two anchoring points, the element being associated with respective means to connect two spaced-apart parts of the element constituted by a free end of the element and an intermediate portion of the element to said to respective anchoring points, a clamp or winch being provided to maintain tension in that portion of the element which extends between the said two spaced-apart parts of the element.

The elongate element may comprise a narrow strap, for example a strap of the type used as a vehicle seat belt, but may also comprise a wide strap or a net-like-element.

Advantageously the means to connect one of the parts of the element to a respective anchoring point comprises a hook provided at the other end of the element, the hook being adapted to engage at the end of the element, the hook being adapted to engage co-operating means connected to the anchoring point.

Preferably the means to connect the other part of the element to the said respective anchoring point comprises a tongue slidably mounted on the element and a buckle connected to the anchoring point.

Conveniently the tongue is provided with the clamp to clampingly engage the element to retain tension in that portion of the element which extends from the tongue to the hook.

Alternatively the means to connect the other part of the element to the respective anchoring points comprises a winch adapted to engage the said part of the element, the winch being connected to the said respective anchoring point.

In one embodiment each of the means to connect part of the element to respective anchoring points comprises a respective winch, each winch being connected to a said respective anchoring point.

Conveniently both ends of the element are accommodated in a respective retractor mechanism comprising a spring-biased spool.

Preferably the said two retractor reels are each mounted in a position above a load-support platform.

Advantageously the vehicle is a motor vehicle, the or each retractor being mounted in part of the motor vehicle that moves relative to the rest of the motor vehicle to provide access to a load-carrying space. The system may be provided in a motor vehicle, a railway carriage, a lorry or truck, or a ship or aeroplane.

In one embodiment the means which connect the element to the anchoring points are slidable to permit the position of said portion of the element to be adjusted.

In order that the invention may be more readily understood, and so that further features thereof may be appreciated, the invention will now be described, by way of example, with reference to the accompanying drawings in which:
FIGURE 1 is a diagrammatic view of the boot of a motor vehicle, such as a motor car, provided with a load-restraint system in accordance with the invention, showing the boot lid in a raised position, whilst showing the load restraint system in a fully retracted position,
FIGURE 2 is a view corresponding to Figure 1 illustrating the load restraint system in a partly extended position,
FIGURE 3 is a view corresponding to Figure 2 illustrating the load in place,
FIGURE 4 is a view corresponding to Figure 3 showing the load restraint system in an operative position,
FIGURE 5 is a view corresponding to Figure 4 showing the boot lid in the closed position,
FIGURE 6 is a sectional view of a railway carriage provided with a load-restraint system in accordance with the invention, the restraint system being shown in the retracted position,
FIGURE 7 is a view corresponding to Figure 6 showing the load-restraint system in a partially extended position,
FIGURE 8 is a view corresponding to Figure 7 showing the load restraint system in an operative position,
FIGURE 9 is a cross-sectional view of a railway carriage provided with an alternative form of a restraint system in accordance with the invention,
FIGURE 10 is a view corresponding to Figure 9 illustrating the restraint system when partly deployed,
FIGURE 11 is a view corresponding to Figures 9 and 10 illustrating the restraint system with a load in place, and
FIGURE 12 is a view corresponding to Figures 9 to 11 illustrating the load restraint system in an alternative operative condition.

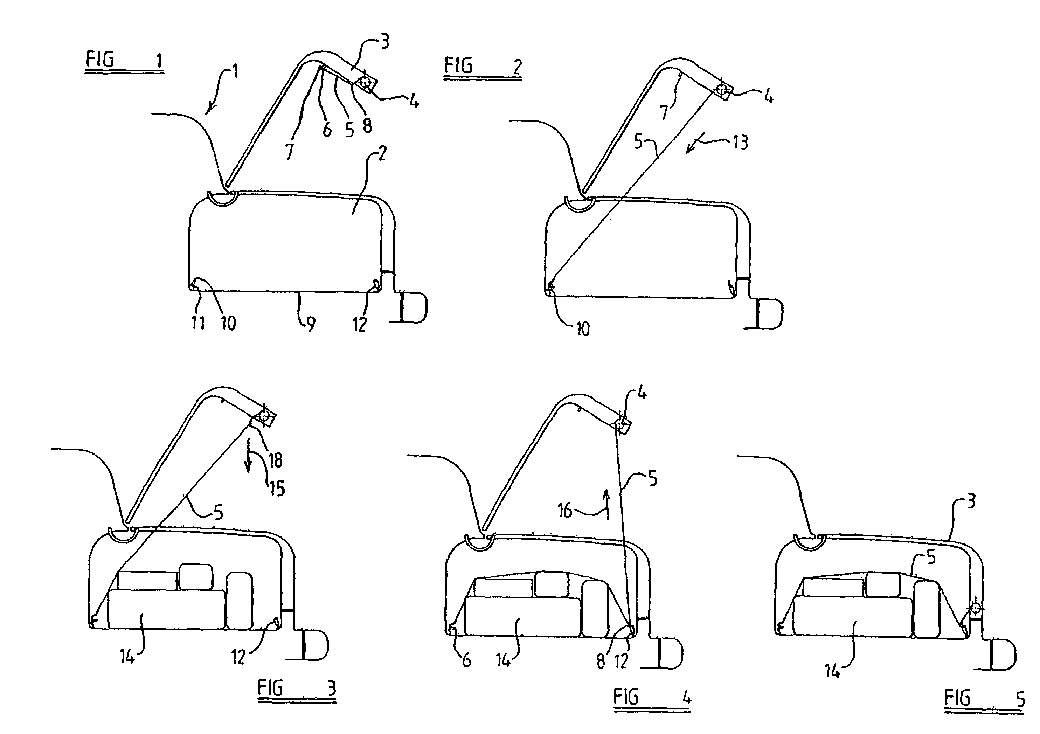

Referring initially to Figures 1 to 5 of the accompanying drawings, a motor vehicle 1 is illustrated schematically, having a load-carrying space in the form of a trunk or boot 2 provided with a lid 3. The lid 3 is shown initially in the open condition.

Mounted on the lid 3 of the boot is a retractor mechanism 4 which comprises a spring-biassed spool, there being a webbing strap 5 which has one end wound on the spool. The spool is adapted to wind in the webbing strap 5. The free end part of the webbing strap 5 is provided with a hook 6. The hook is illustrated engaged with a loop 7 provided on the interior of the boot for that purpose. A tongue 8 is provided which is slidably mounted in position on an intermediate portion of the strap 5 located between the hook 6 and the retractor mechanism 4. The tongue 8 is provided with a clamping mechanism adapted to engage the strap so that, when the clamping mechanism is engaged, the strap cannot slide relative to the tongue.

The boot 2 is provided with a floor 9, adapted to support the load. Towards the front of the boot, at floor level, a loop 10 is provided which is connected to an anchoring point 11. The loop 10 is dimensioned to cooperate with the hook 6, so that the hook 6 can be releasably engaged with the loop 10.

Towards the rear of the boot a buckle 12 is provided adapted to receive the tongue 8. The buckle 12 is located at floor level and is fixed to an anchoring point.

It is to be appreciated that the retractor mechanism 4 may be a retractor of the type conventionally used with a vehicle seat-belt, and strap 5 may be equivalent to a vehicle seat belt although, as will become clear from the following description, there is no requirement for a locking mechanism to be provided. It is also to be appreciated that the tongue 8 may be a tongue as conventionally used with a seat-belt and the buckle 12 may be a buckle as conventionally used with a seat-belt. In alternative embodiments of the invention the strap may be a relatively wide strap or blind, or even may be replaced by a net-like-element.

It will be understood that the load restraint system, the principal components of which have been described above, will initially be in the condition illustrated in Figure 1, with the hook 6 engaged with the loop 7, and with the tongue 8 present on a portion of the strap 5 between the retractor 4 and the hook 6. This combination of components is retained in an unobtrusive position, enabling the boot or trunk 2 of the motor vehicle to be used in a conventional manner if desired.

If it is desired to use the load restraint system to restrain a load within the boot, after the boot lid has been opened, the hook 6 is disengaged from the loop 7 and is moved so that the hook 6 engages the loop 10. This has the effect of withdrawing the strap 5 from the retractor mechanism 4 as indicated by the arrow 13, as shown in Figure 2. The free end of the strap is thus effectively connected to an anchoring point.

The load to be restrained, such as a plurality of packages 14, may then be inserted into the boot, in the manner illustrated in Figure 3. The tongue 8 may then be grasped and may be moved in the direction of the arrow 15 towards the buckle 12. The tongue may be inserted in the buckle 12, and the intermediate portion strap 5 between the hook 6 and the tongue 8 will then pass over the load 14. A further part of the strap passes through the tongue 8 and thus up to the retractor mechanism 4.

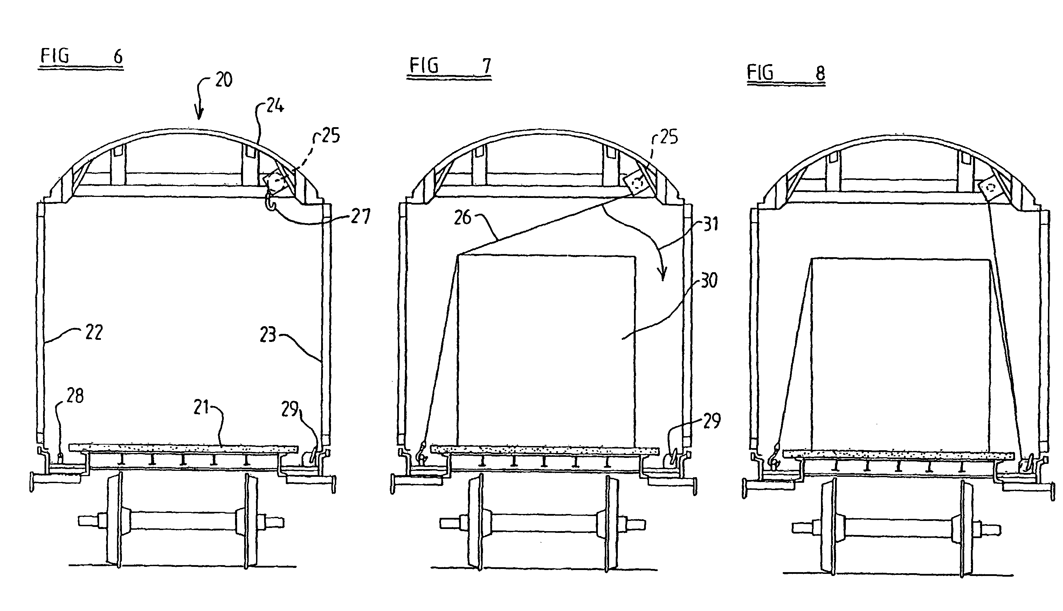

Thus, as shown in Figure 4, one end part of the strap 5 is connected to an anchoring point by means of the hook 6 and the loop 10, the opposed end of the strap is connected to a retractor 4 and a further part of the strap is connected to an anchoring point by means of the tongue 8 and buckle 12.

A tension may be applied to the portion of the strap 5 which is located between the hook 6 and the tongue 8, that is to say the part of the strap that actually engages the load 14, by pulling appropriately on the strap 5 and by actuating the clamping mechanism that is formed integrally with the tongue 8. In certain embodiments, this may be achieved by pulling upwardly on the portion of strap 5, extending between the tongue 8 and the retractor 4, as indicated by the arrow 16. Part of the belt 5 will slide through the clamping mechanism formed on the tongue 8 which automatically clamps the belt to retain tension in the portion of the belt between the tongue and the hook 6.

When the boot lid 3 is closed, as shown in Figure 5, the portion of strap 5 between the tongue 8 and the retractor 4 will be re-wound on to the retractor.

It can be seen that the strap 5 retains the load 14 securely in position.

It is to be appreciated that whilst in the described embodiment of the invention, only one strap was provided, which is located substantially centrally of the motor vehicle, in an alternative embodiment of the invention, two straps would be provided located respectively to the left and to the right of the centre of the vehicle.

Whilst Figures 1 to 5 illustrate a load restraint system in a motor vehicle in the form of a motor car provided with a trunk or boot, it is to be appreciated that the invention may equally be applied to a motor vehicle in the form of an estate car or "MPV" (multi-purpose vehicle), with the retractor mechanism 4 being mounted in the lower part of the rear door of the vehicle, and the loop 10 and buckle 12 being located at positions on the floor of the vehicle, the loop 10 being located towards the front of the available load-carrying space within the vehicle, and the buckle 12 being located adjacent the rear of the available load-carrying space available in the vehicle.

The retractor 4, the loop 10 and the buckle 12 may be mounted to effect a transverse sliding movement, to permit the position of the strap to be adjusted.

Whilst reference has been made above to a load restraint system provided in a motor vehicle, it is to be appreciated that a load restraint system in accordance with the invention may be utilised in an alternative means of transport such as, for example, a railway carriage.

Referring to Figures 6 to 8, an embodiment of the invention is illustrated which is mounted within a railway carriage 20. The railway carriage 20 is provided with a centrally located load carrying platform 21, and side walls 22,23 which support a roof structure 24. Carried by the roof structure 24 is a retractor mechanism 25. The retractor mechanism 25 comprises a spring-biassed spool. A strap 26 is provided, having one end mounted on the spool, the other end being provided with a hook 27.

Adjacent one side of the load carrying platform 21 is a metal loop 28 adapted to be engaged by the hook 27. The loop 28 is connected to an anchoring point. Mounted on the other side of the load carrying platform 21 is a winch 29. The winch 29 is adapted to engage an intermediate part of the strap 26, that is to say part of the strap between the hook 27 and the retractor mechanism 25, and is adapted to apply tension to the strap. The winch is connected to an anchoring point.

Figure 6 illustrates the load restraint system in an initial retracted position with the strap 26 being substantially fully retracted on to the spool of the retractor mechanism 25. The hook 27 is, however, accessible.

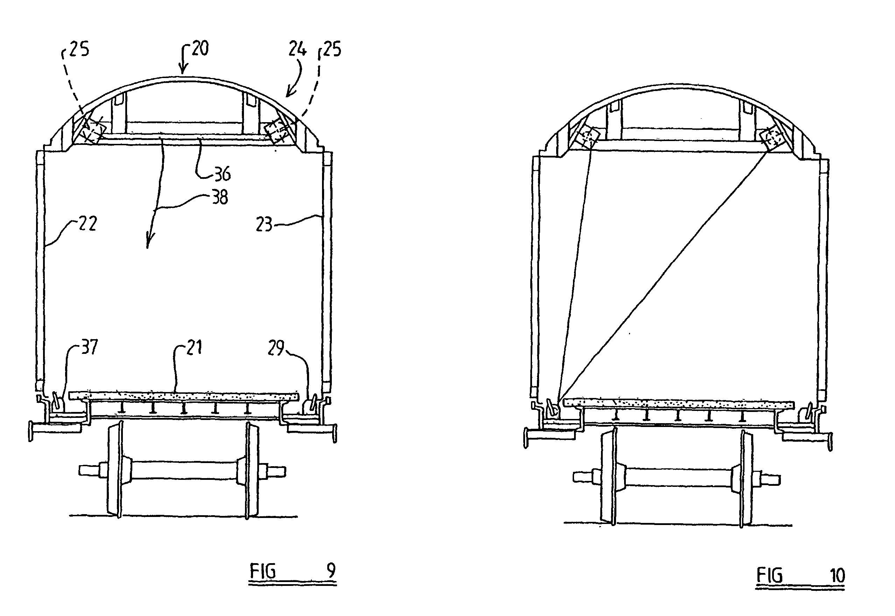

When the load restraint system is to be used initially, the hook 27 is grasped and the strap 26 is withdrawn from the retractor mechanism 25, the hook 27 being engaged with the loop 28. Subsequently a load 30 is introduced into the carriage and placed on the load support platform 21. The arrangement then has the condition illustrated in Figure 7. Subsequently, a part of the strap 26 adjacent the retractor mechanism 25 is grasped and is pulled downwardly, generally as indicated by the arrow 31. This part of the strap is engaged by the winch 29. The portion of the strap that is between the hook and the part engaged by the winch lies over and engages, the load 30. The winch 29 is then operated to apply a tension to that part of the strap 26 located between the winch and the hook 27. The load 30 is thus securely retained in position.

The load restraint system then has the condition illustrated in Figure 8.

Referring now to Figures 9 to 12, in a modified embodiment of the invention provided in a railway carriage, the railway carriage 20 again has a load support platform 21 and side walls 22,23 which support a roof structure 24. The roof support structure 24, however, supports not only a first retractor mechanism 25, but also a second retractor mechanism 35. Each retractor mechanism comprises a spring-biassed spool having a respective end of a webbing strap 36 connected to it. As in the embodiment described above, on one side of the load support platform, a winch 29 is provided, which is connected to an anchoring point. However, on the other side of the load support platform, a second winch 37 is provided, which is also connected to a respective anchoring point.

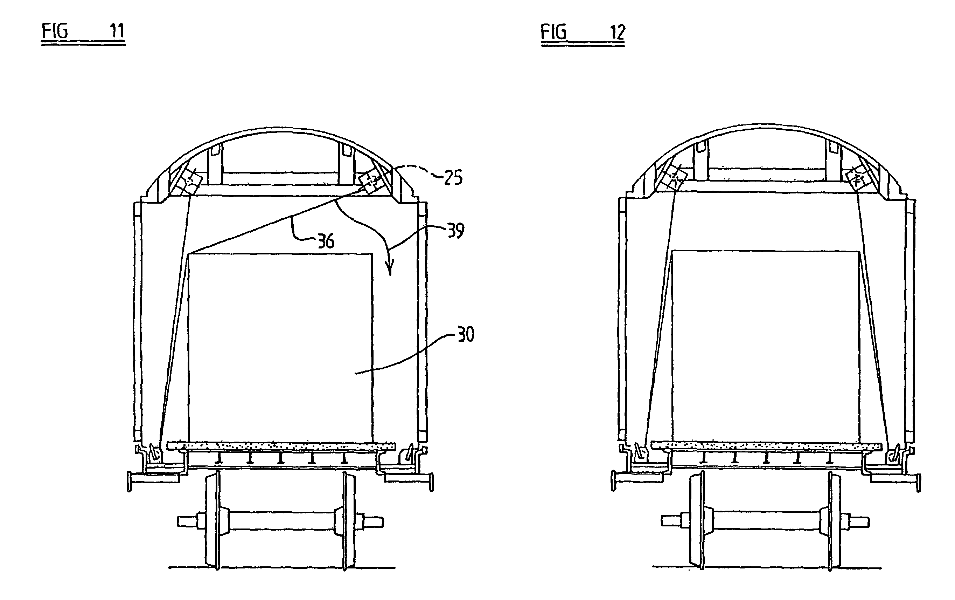

In using the load restraint system of Figure 9, initially a central part of the strap 36 is grasped and is pulled downwardly, as indicated by the arrow 38, that intermediate part of the strap 36 being engaged by the winch 37. The load restraint system then has the condition illustrated in Figure 10. Subsequently a load 30 is introduced into the carriage, and the load restraint system then has the condition illustrated in Figure 11. Subsequently, a part of the strap 36 located adjacent the retractor 25 is grasped and pulled downwardly, generally as indicated by the arrow 39, this part of the strap being engaged with the winch 29. One or both of the winches 37 and 29 may then be actuated to apply tension to that portion of the strap 36 located between the winches, which is the portion of the strap that engages the load 30. The load is thus retained firmed in position, as shown in Figure 12.

In the embodiments of Figures 6 to 12, the retractors and the hook and the winches may be mounted for a sliding motion axially of the railway carriage, thus enabling the position of the strap to be adjusted.

Whilst the embodiments of Figures 6 to 12 have been described with reference to a railway carriage, it is to be appreciated that these embodiments may be utilised in a truck, lorry or trailer, or may even be utilised in a ship or aeroplane.

## Claims

1. A vehicle with a load restraint system, the load restraint system comprising an elongate element (5, 26, 36) one end of the element being connected to a retractor mechanism (4, 25) comprising a spring-biased spool, the retractor mechanism being mounted on the vehicle, whereby the vehicle is additionally provided with two anchoring points, (10, 11, 12, 28, 29, 37) the element (5, 26, 36) is associated with respective means (6, 8, 27) to connect two spaced- apart parts of the element (5, 26, 36) to said two respective anchoring points (10, 11, 12, 28, 29, 37), **characterised in that** a clamp or winch (8, 29, 37) is provided to maintain tension **in that** portion of the element which extends between the said two spaced-apart parts of the element, constituted by the free end of the element and an intermediate portion of the element.

2. A vehicle according to Claim 1 wherein the means to connect one of the parts of the element to a respective anchoring point comprises a hook provided at the other end of the element, the hook being adapted to engage co-operating means connected to the anchoring point.

3. A vehicle according to Claim 2 wherein the means to connect the other part of the element to the other said respective anchoring point comprises a tongue slidably mounted on the element and a buckle connected to the anchoring point.

4. A vehicle according to Claim 3 wherein the tongue is provided with the clamp to clampingly engage the element to retain tension in that portion of the element which extends from the tongue to the hook.

5. A vehicle according to Claim 2 wherein the means to connect the other part of the element to the respective anchoring point comprises a winch adapted to engage the said part of the element, the winch being connected to the said respective anchoring point.

6. A vehicle according to Claim 1 wherein each of the means to connect part of the element to respective anchoring points comprises a respective winch, each winch being connected to a said respective anchoring point.

7. A vehicle according to Claim 6 wherein both ends of the element are accommodated in a respective retractor mechanism comprising a spring-biased spool.

8. A vehicle according to Claim 7 wherein the said two retractor reels are each mounted in a position above a load-support platform.

9. A vehicle according to any one of the preceding Claims wherein the vehicle is a motor vehicle, the or each retractor being mounted in part of the motor vehicle that moves relative to the rest of the motor vehicle to provide access to a load-carrying space.

10. A vehicle with a load-restraint system according to any one of the preceding Claims wherein the vehicle is a motor vehicle.

11. A vehicle with a load-restraint system according to any one of Claims 1 to 8 wherein the vehicle is a railway carriage.

12. A vehicle with a load-restraint system according to any one of Claims 1 to 10 wherein the vehicle is a lorry or truck.

13. A vehicle with a load-restraint system according to any one of Claims 1 to 8 wherein the vehicle is a ship or aeroplane.

14. A vehicle with a load-restraint system according to any one of the preceding Claims wherein the means which connect the element to the anchoring points are slidable to permit the position of said portion of the element to be adjusted.

## Patentansprüche

1. Fahrzeug mit einem Lasthaltesystem, wobei das Lasthaltesystem ein längliches Element (5, 26, 36) aufweist, wobei ein Ende des Elements mit einem Rückzugsmechanismus (4, 25) verbunden ist, der eine federvorgespannte Spule aufweist, wobei der Rückzugsmechanismus an dem Fahrzeug angebracht ist, wobei das Fahrzeug zusätzlich mit zwei Verankerungspunkten (10, 11, 12, 28, 29, 37) versehen ist und das Element (5, 26, 36) entsprechenden Mitteln (6, 8, 27) zugeordnet ist, um zwei gegenseitig beabstandete Teile des Elements (5, 6, 26, 36) mit den beiden Verankerungspunkten (10, 11, 12, 28, 29, 37) zu verbinden, **dadurch gekennzeichnet, daß** eine Klemmvorrichtung oder Winde (8, 29, 37) vorgesehen ist, um eine Spannung in dem Abschnitt des Elements aufrechtzuerhalten, der sich zwischen den beiden genannten, voneinander beabstandeten Teilen des Elements erstreckt, die durch das freie Ende des Elements und einen mittleren Abschnitt des Elements gebildet werden.

2. Fahrzeug nach Anspruch 1, **dadurch gekennzeichnet, daß** das Mittel zum Verbinden eines der Teile des Elements mit einem entsprechenden Verankerungspunkt einen Haken aufweist, der an dem anderen Ende des Elements angeordnet ist, wobei der Haken dazu bestimmt ist, in zusammenwirkende Mittel einzugreifen, die mit dem Verankerungspunkt verbunden sind.

3. Fahrzeug nach Anspruch 2, **dadurch gekennzeichnet, daß** das Mittel zum Verbinden des anderen Teils des Elements mit dem anderen entsprechenden Verankerungspunkt eine Zunge aufweist, die verschieblich auf dem Element gehalten ist, und eine Schnalle, die mit dem Verankerungspunkt verbunden ist.

4. Fahrzeug nach Anspruch 3, **dadurch gekennzeichnet, daß** die Zunge mit der Klemmvorrichtung versehen ist, um das Element klemmend zu erfassen, um Spannung in dem Abschnitt des Elements aufrechtzuerhalten, die sich von der Zunge zu dem Haken erstreckt.

5. Fahrzeug nach Anspruch 2, **dadurch gekennzeichnet, daß** das Mittel zum Verbinden des anderen Teils des Elements mit dem entsprechenden Verankerungspunkt eine Winde aufweist, die dazu bestimmt ist, den genannten Teil des Elements zu erfassen, wobei die Winde mit dem genannten Verankerungspunkt verbunden ist.

6. Fahrzeug nach Anspruch 1, **dadurch gekennzeichnet, daß** jedes der Mittel zum Verbinden eines Teils des Elements mit entsprechenden Verankerungspunkten eine jeweilige Winde aufweist, wobei jede Winde mit einem entsprechenden Verankerungspunkt verbunden ist.

7. Fahrzeug nach Anspruch 6, **dadurch gekennzeichnet, daß** beide Enden des Elements in einem jeweiligen Rückzugsmechanismus aufgenommen sind, der eine federvorgespannte Spule aufweist.

8. Fahrzeug nach Anspruch 7, **dadurch gekennzeichnet, daß** die beiden Rückzugsspulen jeweils in einer Position oberhalb einer lasttragenden Plattform angebracht sind.

9. Fahrzeug nach einem der vorangehenden Ansprüche, **dadurch gekennzeichnet, daß** das Fahrzeug ein Motorfahrzeug ist, wobei der oder jeder Rückzugsmechanismus in einem Teil des Motorfahrzeugs angebracht ist, das sich relativ zum übrigen Teil des Motorfahrzeugs bewegt, um Zugang zu einem eine Last tragenden Bereich bereitzustellen.

10. Fahrzeug mit einem Lasthaltesystem nach einem der vorangehenden Ansprüche, **dadurch gekennzeichnet, daß** das Fahrzeug ein Motorfahrzeug ist.

11. Fahrzeug mit einem Lasthaltesystem nach einem der Ansprüche 1 bis 8, **dadurch gekennzeichnet, daß** das Fahrzeug ein Schienenfahrzeug ist.

12. Fahrzeug mit einem Lasthaltesystem nach einem der Ansprüche 1 bis 10, **dadurch gekennzeichnet, daß** das Fahrzeug ein Lieferwagen oder Lastkraftwagen ist.

13. Fahrzeug mit einem Lasthaltesystem nach einem der Ansprüche 1 bis 8, **dadurch gekennzeichnet, daß** das Fahrzeug ein Schiff oder ein Luftfahrzeug ist.

14. Fahrzeug mit einem Lasthaltesystem nach einem der vorangehenden Ansprüche, **dadurch gekennzeichnet, daß** das Mittel, das das Element mit den Verankerungspunkten verbindet, verschieblich ist, um zu ermöglichen, daß die Position des genannten Abschnitts des Elements eingestellt werden kann.

## Revendications

1. Véhicule équipé d'un système de retenue de charge, le système de retenue de charge comprenant un élément allongé (5, 26, 36), une extrémité de l'élément étant reliée à un mécanisme d'escamotage (4, 25) comprenant une bobine rappelée par ressort, le mécanisme d'escamotage étant monté sur le véhicule, ce par quoi le véhicule est pourvu, de manière supplémentaire, de deux points d'ancrage (10, 11, 12, 28, 29, 37), l'élément (5, 26, 36) est associé à des moyens respectifs (6, 8, 27) pour amarrer deux parties espacées l'une de l'autre de l'élément (5, 26, 36) auxdits deux points d'ancrage respectifs (10, 11, 12, 28, 29, 37), **caractérisé en ce qu'**un dispositif de serrage, ou treuil, (8, 29, 37) est prévu pour maintenir une traction dans la partie de l'élément qui s'étend entre lesdites deux parties espacées l'une de l'autre de l'élément, constituées de l'extrémité libre de l'élément et d'une partie intermédiaire de l'élément.

2. Véhicule selon la revendication 1, dans lequel les moyens servant à amarrer l'une des parties de l'élément à un point d'ancrage respectif comprennent un crochet disposé à l'autre extrémité de l'élément, le crochet étant apte à engager des moyens de coopération liés au point d'ancrage.

3. Véhicule selon la revendication 2, dans lequel les moyens servant à amarrer l'autre partie de l'élément audit autre point d'ancrage respectif comprennent une languette montée de manière coulissante sur l'élément et une boucle liée au point d'ancrage.

4. Véhicule selon la revendication 3, dans lequel la languette est pourvue du dispositif de serrage pour engager par serrage l'élément afin de maintenir une traction dans la partie de l'élément qui s'étend de la languette vers le crochet.

5. Véhicule selon la revendication 2, dans lequel les moyens servant à amarrer l'autre partie de l'élément au point d'ancrage respectif comprennent un treuil apte à engager ladite partie de l'élément, le treuil étant lié audit point d'ancrage respectif.

6. Véhicule selon la revendication 1, dans lequel chacun des moyens servant à amarrer une partie de l'élément à des points d'ancrage respectifs comprend un treuil respectif, chaque treuil étant lié audit un point d'ancrage respectif.

7. Véhicule selon la revendication 6, dans lequel les deux extrémités de l'élément sont reçues dans un mécanisme d'escamotage respectif comprenant une bobine rappelée par ressort.

8. Véhicule selon la revendication 7, dans lequel lesdites deux bobines d'escamotage sont toutes les deux montées dans une position au-dessus d'une plate-forme de support de charge.

9. Véhicule selon l'une quelconque des revendications précédentes, dans lequel le véhicule est un véhicule à moteur, le ou chaque dispositif d'escamotage étant monté dans une partie du véhicule à moteur que l'on bouge par rapport au reste du véhicule à moteur pour avoir un accès à un espace de support de charge.

10. Véhicule équipé d'un système de retenue de charge selon l'une quelconque des revendications précédentes, dans lequel le véhicule est un véhicule à moteur

11. Véhicule équipé d'un système de retenue de charge selon l'une quelconque des revendications 1 à 8, dans lequel le véhicule est un wagon ferroviaire.

12. Véhicule équipé d'un système de retenue de charge selon l'une quelconque des revendications 1 à 10, dans lequel le véhicule est un camion ou un poids lourd.

13. Véhicule équipé d'un système de retenue de charge selon l'une quelconque des revendications 1 à 8, dans lequel le véhicule est un navire ou un avion.

14. Véhicule équipé d'un système de retenue de charge selon l'une quelconque des revendications précédentes, dans lequel les moyens qui amarrent l'élément aux points d'ancrage sont coulissants pour permettre de régler la position de ladite partie de l'élément.
